(19) Europäisches Patentamt
European Patent Office
Office européen des brevets

(11) EP 4 726 487 A1

(12) **EUROPEAN PATENT APPLICATION**

(43) Date of publication:
**15.04.2026 Bulletin 2026/16**

(21) Application number: **24205319.7**

(22) Date of filing: **08.10.2024**

(51) International Patent Classification (IPC):
**G05D 1/242** (2024.01)  **G05D 1/606** (2024.01)
**G05D 1/622** (2024.01)  **G05D 1/646** (2024.01)
**G05D 107/00** (2024.01)  **G05D 109/30** (2024.01)
**G08G 3/00** (2006.01)  **B63H 25/00** (2006.01)

(52) Cooperative Patent Classification (CPC):
**G05D 1/646; B63B 79/15; B63B 79/40;**
**G05D 1/242; G05D 1/606; G05D 1/622; G08G 3/02;**
B63H 2025/045; G05D 2107/27; G05D 2109/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **FEYZMAHDAVIAN, Hamid**
**169 73 Stockholm (SE)**
• **TERVO, Kalevi**
**02730 Espoo (FI)**

(74) Representative: **Kransell & Wennborg KB**
**P.O. Box 27834**
**115 93 Stockholm (SE)**

(54) **WIND AND OCEAN-CURRENT INFORMED SHIP PATH PLANNING**

(57)     The present invention generally relates to a computer-implemented method for generating a path (P) for a marine vessel (10), the method comprising: acquiring (S102) wind data (28) indicating strength and direction of wind with respect to the marine vessel, acquiring (S104) sea current data (32) indicating strength and direction of current with respect to the marine vessel, detecting (S104) positions of obstacles (40, 50) ahead of the marine vessel (10), determining (S106) constraints related to passing distance (P1, P2) from the obstacles (40, 50) for the marine vessel (10), generating a path (P) for the marine vessel (10) for counteracting the wind and current calculated based on the wind data and current data while respecting the constraints, wherein the constraints are adjusted based on the wind data and the current data to ensure a buffer distance (B1, B2) to the obstacles (40, 50), and providing output data (60) of the generated path.

Fig. 2

## Description

### Field of the Invention

The present invention generally relates to a computer-implemented method for generating a path for a marine vessel, to a control unit for executing the method, to a marine vessel comprising the control unit, and to a corresponding computer program product.

### Background

Path planning algorithms play a key role in optimizing performance and ensuring the successful execution of missions for marine vessels. These algorithms are responsible for generating position trajectories and speed profiles, while accounting for various constraints such as propulsion capabilities and obstacles at sea. To plan optimal and safe paths for ships, it is necessary to take into account environmental disturbances such as wind and current, as they often influence the vessel's motion.

### Summary

In view of the above-mentioned and other drawbacks of the prior art, it is an object of the present invention to provide a method for path-planning for marine vessels that at least partly alleviates the drawbacks of prior art.
According to a first aspect of the invention, there is provided a computer implemented method for generating a path for a marine vessel, the method comprising: acquiring wind data indicating strength and direction of wind with respect to the marine vessel, acquiring current data indicating strength and direction of current with respect to the marine vessel, detecting positions of at least one obstacle ahead of the marine vessel, determining constraints related to passing distance from the obstacles for the marine vessel, generating a path for the marine vessel for counteracting the wind and current calculated based on the wind data and current data while respecting the constraints, wherein the constraints are adjusted based on the wind data and the current data to ensure a buffer distance to the at least one obstacle, and providing output data of the generated path.
The present invention is at least partly based on the realization to adaptively adjusting the constraints to account for wind and sea currents such that a safe buffer distance to the obstacles can be ensured despite changing wind and sea current conditions. The constraints which may be associated with static and/or moving obstacles are thus fine-tuned based on the direction and strength of wind and sea current. The amount of adjustment of the constraints depends on the magnitude of the wind and sea current.
The safety of marine vessel navigation is improved by dynamically adjusting path constraints based on real-time wind and current data, ensuring a sufficient buffer distance from obstacles. Additionally, embodiment of the present disclosure provides for improving maneuverability in challenging conditions, minimizes collision risks, and may be continuously and autonomously performed.
The wind and sea current data may be acquired by on-board sensors or by onshore or offshore weather stations that send the data to the marine vessel.
The positions of obstacles may be determined by on-board sensors such as Radar and Lidar and/or by receiving navigation data such as GPS signals, or position data received from secondary marine vessels.
In embodiments, the generated path may be determined such that it that minimizes an energy required for counteracting the wind and current. Advantageously, the energy consumption of the marine vessel may be reduced by incorporating the energy required to counteract environmental forces into the path-planning generating, reducing fuel usage and operational costs. For example, generating the path may include using an objective function that includes minimizing an energy required for counteracting the wind and current.
In embodiments, the objective function may further include to minimize the required propulsion energy of the marine vessel while travelling the path. By including the minimization of propulsion energy in the objective function, the system not only accounts for the environmental forces caused by wind and sea current but also ensures that the vessel operates efficiently. Advantageously, this may reduce the fuel consumption and lower operational costs, while maintaining optimal path planning performance for the marine vessel.
In embodiments, a mathematical model for environmental forces caused by the wind and current on the marine vessel may be included in the objective function. Using a mathematical function of the environmental forces may increase the accuracy of the generated path since the effects of the wind and sea currents may be more precisely quantified. This provides for a safer and more energy-efficient generated path.
Using the mathematical model for wind and current, the energy needed to compensate the effects of wind and current may be incorporated as a term within the objective function.
In embodiments, the buffer distance may be selected such that it allows an operator to manually avoid obstacles in case of unpredicted events that affect a present path compared to the generated path. In order words, the buffer distance is selected such that an operator may take control of the marine vessel and still manage to safely operate the vessel despite the obstacles. For example, this provides a fail-safe mechanism, enabling human intervention in situations where the current path may need to be altered quickly, such as when unexpected obstacles or changing environmental conditions arise. The buffer distance is thus selected based on an operator maneuver criterion that may be manually tailored or based on a database of maneuverability data.

In embodiments, the adjustment of the constraints may depend on the strengths and directions of the wind and current. The constraints may be dynamically adjusted as the wind and current change. That is, as the wind and sea current change, the path constraints are adjusted accordingly, maintaining optimal buffer distances and energy efficiency.

In embodiments, the obstacles may include moving and static obstacles. This reduces the risk of collision, especially in unforeseen situations influenced by wind and current.

Preferably, the method may be continuously performed as the marine vessel is operated.

In embodiments, the adjustment may include virtually moving the obstacles in opposite direction to environmental forces that are calculated based on the wind data and the current data. Virtually moving here means to adjust the location of the obstacles in the calculations to include their changing position caused by wind and sea current. This provides for a simple way to include the impact of wind and sea current on moving obstacles. The extent of this adjustment depends on the magnitude of wind and current.

The method may be autonomously performed for an at least partly autonomous marine vessel.

According to a second aspect of the invention, there is provided a control unit configured to perform the steps of any one of the embodiments of the first aspect.

Further effects and features of the second aspect of the invention are largely analogous to those described above in connection with the first aspect of the invention.

There is further provided a marine vessel comprising the control unit.

According to a third aspect of the invention, there is provided a computer program product for performing the method described herein, when executed by a control unit.

The computer program product comprises program code for: acquiring wind data indicating strength and direction of wind with respect to the marine vessel, acquiring current data indicating strength and direction of current with respect to the marine vessel, detecting positions of obstacles ahead of the marine vessel, determining constraints related to passing distance from the obstacles for the marine vessel, generating a path for the marine vessel for counteracting the wind and current calculated based on the wind data and current data while respecting the constraints, wherein the constraints are adjusted based on the wind data and the current data to ensure a buffer distance to the obstacle, and providing output data of the generated path.

Further effects and features of the third aspect of the invention are largely analogous to those described above in connection with the first aspect and the second aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

Brief Description of the Drawings

These and other aspects of the present invention will now be described in more detail, with reference to the appended drawings showing an example embodiment of the invention, wherein:

Fig. 1 schematically illustrates a marine vessel according to an embodiment of the invention;
Fig. 2 is a flow-chart of method steps according to embodiments of the present invention; and
Fig. 3 schematically illustrates a marine vessel, obstacles, and a generated path according to embodiments of the present invention.

Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

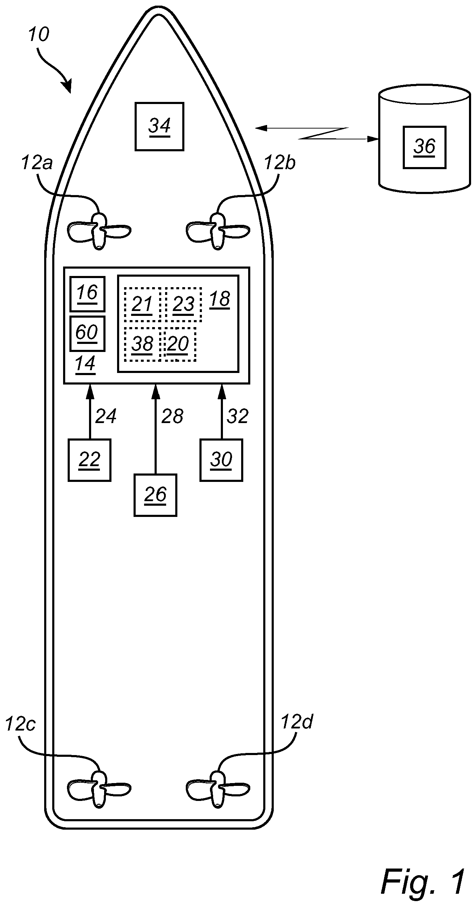

Fig. 1 schematically represents a top view of a marine vessel 10. The marine vessel 10 may for example be a ship or a floating production storage and offloading (FPSO) unit. The vessel 10 comprises a plurality of thrusters, here a first thruster 12a, a second thruster 12b, a third thruster 12c and a fourth thruster 12d. One, several or all of the thrusters 12a-12d may also be referred to with reference numeral "12".

Each thruster 12 is rotatable in a horizontal plane (parallel with the drawing plane of Fig. 1) into different thrust directions. Each thruster 12 may comprise a propeller and an engine driving the propeller. By increasing an engine speed of the engine, the thrust force of the thruster 12 can be increased, and vice versa. The thrusters 12 are here exemplified as azimuthing thrusters although other types of thrusters are also envisaged.

The vessel 10 further comprises a control system 14. The control system 14 of this example comprises a control unit 16 and a memory 18. The memory 18 has a computer program 20 stored thereon. The computer program 20 comprises program code which, when executed by the control unit 16, causes a data processing device, or control unit, 16 to perform, or command performance of, various steps described herein.

As shown in Fig. 1, a model 21 of the vessel 10 may be stored in the memory 18. The model 21 may for example be a nonlinear model of the vessel 10 describing the motion of the vessel 10 in the horizontal plane.

The vessel 10 of this example further comprises one or more sensors, here exemplified as a position sensor 22. The position sensor 22 is arranged to provide position data 24 to the control system 14. The position data 24 is indicative of a position of the vessel 10 in the horizontal plane. The position sensor 22 may for example be a GPS device further providing map data to the control system 14. The marine vessel 10 may further have access to nautical charts 23 and map data 23 from the memory 18 or from the server 36.

The vessel 10 further comprises sensors 26, 30 for detecting wind strength and direction and sea current strength and direction. Wind data 28 may be provided from the wind sensor 26 to the control system 14 and sea current data 28 may be provided from the sea current sensor 26 to the control system 14. Alternative or additionally, the control system 14 may receive wind data and/or sea current data remotely using wireless communication technology 34 from an onshore or offshore weather station 36 or server 36.

When operating a marine vessel 10 along a path the control system 14 controls the thrusters 12 to propel the marine vessel from a first position to a second position. When traveling along a path, it is desirable to find a safe path that avoids collisions with obstacles and that may also provide for optimized energy consumption. However, wind and sea currents complicate not only operating the marine vessel but also estimating how obstacles, such as secondary marine vessels, are affected by the wind and sea current. To improve safety for marine vessels embodiments herein propose generating paths for marine vessels where wind and sea currents are accounted for by introducing constraints related to passing distance from the obstacles for the marine vessel, and where the constraints are adjusted based on the wind data and the current data to ensure a buffer distance to each of the obstacles. Preferably, the generated path balances safety and energy consumption. In other words, when generating the path, safety is prioritized while minimizing energy consumption.

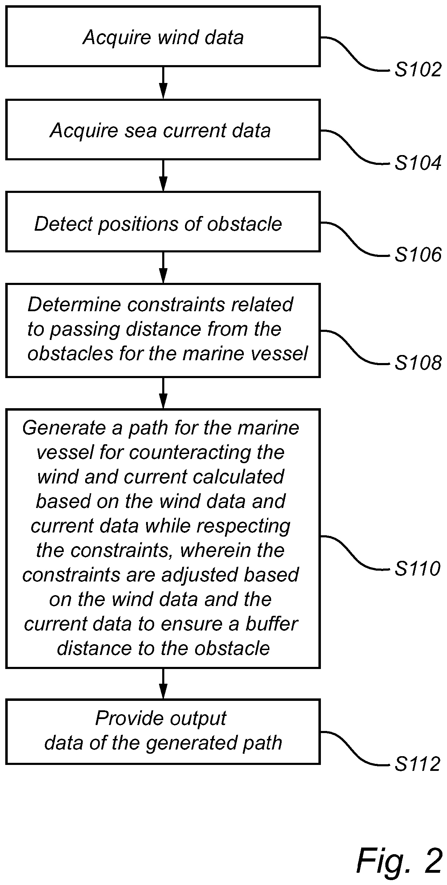

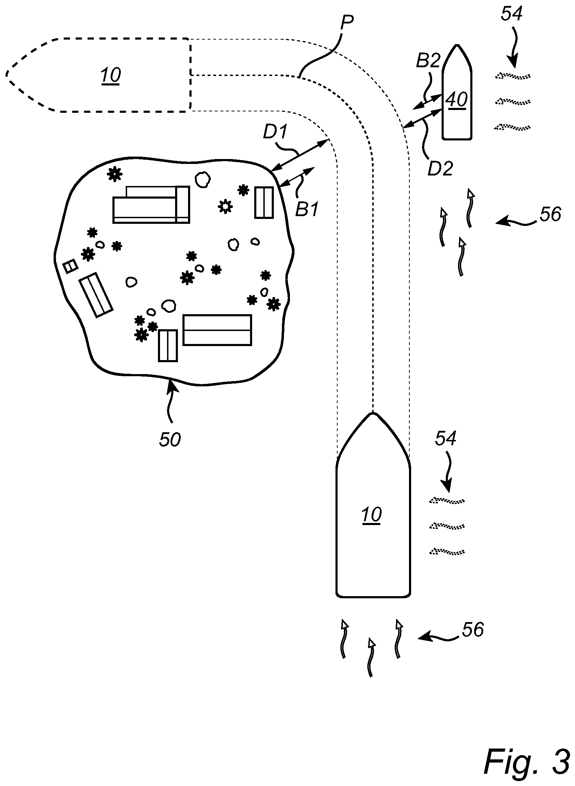

Fig. 2 is a flow-chart of method steps according to embodiments of the invention. Fig. 3 schematically illustrates a marine vessel 10 travelling along a path under the influence of wind and sea current. Fig. 2-3 will be described in conjunction.

The marine vessel 10 is travelling at sea and is about to make a turn around the static obstacle 50. Ahead of the vessel 10 there is also a moving obstacle 40 in the form of a secondary vessel 40. The host marine vessel 10 and the secondary marine vessel 40 are under the influence of wind 54 and sea current 56. In this example, the wind 54 is from the starboard side and the sea current from the aft side of the host marine vessel 10. The turn about the static obstacle 50 is towards the port side from the present position of the host marine vessel 10.

In step S102, acquiring, by the control unit 16, wind data 28 indicating strength and direction of wind 54 with respect to the marine vessel 10. The wind is here the wind at the location of and in the vicinity of the marine vessel 10.

In step S104, acquiring, by the control unit 16, sea current data indicating strength and direction of sea current 56 with respect to the marine vessel. It is here noted that the sea current 56 is in the vicinity of the marine vessel 10.

In step S106, detecting, by the control unit 16, positions of obstacles 40, 50 ahead of the marine vessel 10. The positions may be detected from map data, especially for static obstacles 50 such as land, islands. Marin vessel positions 40 may be retrieved from services such as GPS data transmitted from secondary vessels to the host marine vessel, although position data may also be retrieved by detection using radar and Lidar or similar.

In step S108, determining, by the control unit 16, constraints related to passing distance D1 and D2 from the respective obstacles 40, 50 for the marine vessel 10. The constraints may be different depending on the type of obstacle. A moving obstacle such as the marine vessel 40 may require a longer passing distance D2 than a static obstacle 50 since the uncertainty in position of a moving obstacle is higher than the uncertainty in position for a static obstacle 50. Furthermore, the type of moving object 40 may also affect the constraint concerning passing distance D2. For example, a large ship may require a different passing distance than a small vessel.

In step S110, generating, by the control unit 16, a path P for the marine vessel 10 for counteracting the wind 54 and current 56 calculated based on the wind data 28 and sea current data 32 while respecting the constraints. The constraints are adjusted based on the wind data and the current data to ensure a buffer distance B1, B2 to the obstacle 40, 50. More precisely, the adjustment of the constraints depends on the strengths and directions of the wind 54 and current 56, where the constraints are dynamically adjusted as the wind and current change. This is especially advantageous when the method described herein is continuously performed as the marine vessel is operated. In other words, the generated path P is updated with some frequency to capture changing circumstances or conditions such as the presence of obstacles and changing wind and sea currents.

In step S112, providing, by the control unit 16, output data 60 of the generated path. The output data 60 may be used by the control system 14 for controlling the propulsion of the marine vessel 10 along the generated path. The output data 60 may for example include control signals for controlling thrusters 12 of the propulsion system such that the generated path can be automatically followed.

The generated path is preferably determined such that it minimizes an energy required for counteracting the wind and current. For this, generating the path may preferably include using an objective function 38 that includes minimizing an energy required for counteracting the wind and current. The objective function 38 may include minimizing the required propulsion energy of the marine vessel 10 while travelling the path.

Determining the path P may be achieved in various ways other than using the objective function. One possible methodology to generate the path P is to utilize techniques such as rule-based methods. These rely on predefined rules and heuristics to guide path planning without formal optimization. Another possibility could be using machine learning techniques such as reinforcement learning, where the system learns an optimal path through trial and error, rather than explicitly optimizing a mathematical function. Additionally, multi-objective optimization could be used, allowing for a more flexible approach that balances multiple performance criteria simultaneously, rather than optimizing a single objective function. Other example algorithms include genetic algorithms, convolutional neural networks or recurrent neural networks, to mention a few further examples.

An optimization problem for generating a path P that utilizes an objective function 38 will now be described, as an example.

The optimization problem is formulated as

$$\underset{\eta(\cdot),v(\cdot),F(\cdot),s_c,s_w,\,t_f}{minimize} \quad t_f + q_c s_c + q_w s_w + \int_0^{t_f} q_E E \, dt \qquad \text{(OP1)}$$

$$subject\ to \quad \begin{bmatrix} \dot{\eta} \\ \dot{v} \\ \dot{F} \end{bmatrix} = \begin{bmatrix} R(\varphi)v \\ M^{-1}(-C(v)v - D(v)v + BF) \\ \omega \end{bmatrix}, \qquad \text{(OP2)}$$

$$A_\tau BF \le b_\tau, \qquad \text{(OP3)}$$

$$\omega_{\min} \le \omega \le \omega_{\max}, \qquad \text{(OP4)}$$

$$\eta(0) = \eta_s, \qquad \text{(OP5)}$$

$$v(0) = v_s, \qquad \text{(OP6)}$$

$$A_s \left( c_{rot}(\varphi) \begin{bmatrix} x_i \\ y_i \end{bmatrix} + \begin{bmatrix} x \\ y \end{bmatrix} + (d_{\text{wind}} - s_w)e_{\text{wind}} \right) \le b_s \quad \text{(OP7)}$$

$$A_s \left( c_{rot}(\varphi) \begin{bmatrix} x_i \\ y_i \end{bmatrix} + \begin{bmatrix} x \\ y \end{bmatrix} + (d_{\text{current}} - s_c)e_{\text{current}} \right) \le b_s \quad \text{(OP8)}$$

Here, (OP1) represents the objective function, which includes several terms:

$t_f$ is the duration time of maneuvering.
$s_c$, $s_w$ are slack variables corresponding to the safety distance, B1, B2, from the boundaries of the obstacles against the current and wind directions, respectively. For example, a desired safety or buffer distance B1, B2, from obstacles can be set, for example, 50 meters. However, in narrow channels, maintaining the desired buffer distance, e.g., at 50 meters, may not be feasible. In such cases, the slack variable allows the optimization algorithm to find a solution that gets as close as possible to the safety distance, in this example the 50-meter target.

$q_c$, $q_w$ are weights in the objective function that penalize the safety distances, controlling the importance of the safety distance in the optimization compared to other terms.

$E$ is the term representing the energy consumption required to mitigate current and wind effects.

$q_E$ is the weight on penalizing energy consumption.

Therefore, the objective function includes four terms to ensure time optimality, safety distance with respect to current and wind, and energy optimality. The decision variables of the optimization problem include the position and velocity trajectories for vessel maneuvering, the forces and torque needed to follow these trajectories, and the duration of the maneuvering task.

In the optimization problem, (OP2) represents the constraint corresponding to the kinematic and kinetic equations of the marine vessel 10. This constraint guarantees that the path generated by solving the optimization problem adheres to the ship's 10 motion equations, thereby guaranteeing dynamic feasibility. In the equality (OP2), $\eta = [x, y, \varphi]^T \in R^3$ denotes the position and orientation of the vessel represented in an Earth-fixed frame, where x and y, respectively, are distances North and East from the NED (North-East-Down coordinate system) origin to the vessel's center of gravity, and $\varphi$ is the heading angle. The velocity vector of the vessel is denoted by $v = [u, v, r]^T \in R^3$, where $u$ describes the body-fixed velocity in surge (along the vessel's longitudinal axis), $v$ sway (across that axis), and r yaw rate (angular velocity). The rotation matrix $R(\varphi)$ is given by:

$$R(\varphi) = \begin{bmatrix} \cos \varphi & -\sin \varphi & 0 \\ \sin \varphi & \cos \varphi & 0 \\ 0 & 0 & 1 \end{bmatrix}$$

In the equality (OP2), **M** is the body inertia matrix, which is the sum of rigid-body mass and hydrodynamic added mass. The **C**(v) matrix contains nonlinear terms due to the Coriolis and centripetal effects. Matrix **D**(v) contains hydrodynamic damping or drag forces. The vector $F = [F_x, F_y, M_r]^T$ captures total forces and moment due to the thrusters, where $F_x$, $F_y$, and $M_r$ are respectively forces and torque that act on the surge, sway, and yaw dynamics. $\omega$ is the rate of change of forces generated by thrusters of the vessel.

Inequality constraints (OP3) and (OP4) correspond to the capabilities of the marine vessel's 10 propulsion system. These constraints impose limits on the force and torque generated by the marine vessel's thrusters, as well as restrictions on the rate at which the forces generated by each thruster can change. The matrices $A_\tau$, **B**, $b_\tau$ in (OP3) are calculated based on the positions of the marine vessel's thrusters, as well as their limitations in terms of the magnitude and direction of the forces they can generate.

Equality constraints (OP5) and (OP6) represent the current status of the marine vessel. These constraints ensure that the optimization problem is initialized with the marine vessel's current position and velocity, allowing the marine vessel 10 to follow the generated path smoothly without abrupt maneuvers.

Inequality constraints (OP7) and (OP8) correspond to maintaining a safety distance against current and wind directions. $e_{wind}$ and $e_{current}$ are the unit vectors along the velocity vector of wind and current, respectively. These vectors are calculated as

$$e_{wind} = \frac{V_{wind}}{\|V_{wind}\|}, e_{current} = \frac{V_{current}}{\|V_{current}\|}.$$

Here, $V_{wind}$, $V_{current}$ are the wind and current velocities in the North and East components (earth-frame coordinates). $d_{wind}$ is the desired distance from boundaries against the wind direction, which can be adjusted according to wind strength: a smaller $d_{wind}$ for light winds and a larger $d_{wind}$ for strong winds. The same principle applies for $d_{current}$. The matrices $A_s$, $b_s$ are calculated based on the locations of obstacles around the marine vessel. These matrices define a collision-free polygon, which can then be used by the algorithm to find a safe path. In these two inequalities, $c_{rot}(\varphi)$ is the rotation matrix from the body-frame to the earth-frame, given by

$$c_{rot}(\varphi) = \begin{bmatrix} \cos(\varphi) & -\sin(\varphi) \\ \sin(\varphi) & \cos(\varphi) \end{bmatrix}$$

Preferably, a mathematical model for environmental forces caused by the wind and current on the marine vessel is included in the objective function 38. The mathematical model is used for calculating the energy consumption, E. This energy, E, is a function of the forces and torques exerted on the marine vessel 10 by wind and current. These forces and torques are computed using the mathematical model that takes as inputs the magnitude and direction of the wind and current, along with the vessel's position, velocity, and dimensions, and outputs the corresponding forces and torques.

The buffer distance $s_c$, $s_w$ may selected such that it allows an operator to manually avoid obstacles in case of unpredicted events that affect a present path compared to the generated path. That is, a slightly larger slack $s_c$, $s_w$ may be selected such that an operator may interrupt and take over the operation of the vessel 10. As discussed above, the slack variables $s_c$, $s_w$ may be initialized based on the operator's preferred safety distance during maneuvering, for example, 50 meters. While the optimization algorithm strives to meet this preference, it may not always be feasible in situations such as narrow channels or crowded spaces. In such cases, the optimization algorithm finds the closest possible value to the desired safety distance.

The adjustment of the constraints may be performed by virtually moving the obstacles 40, 50 in opposite direction to environmental forces calculated based on the wind data and the current data. That is, the control unit 16 may move the objects virtually to mimic the effect of the environmental forces for the calculations of the path. In the equations OP7 and OP8 this is represented by the vectors $\mathbf{e_{wind}}$ and $\mathbf{e_{current}}$ pointing in the opposite direction to the current and wind. These vectors shift the positions of the obstacles accordingly.

As an example, virtually moving the objects for adjusting the constraints is performed, by approximating the object, whether static or moving, by a polygon that surrounds its location on the map. The polygon preferably fully encloses the obstacle. For example, one approach is to calculate the convex hull of the obstacle's boundary points. Then, based on the direction of the wind and current, the polygon is shifted in the opposite direction using a linear transformation. The magnitude of the wind and current determines the extent of this shift.

The method described herein may be autonomously performed by the control unit 16 for an at least partly autonomous marine vessel 10.

The method described herein generates a path preferably for automated control of the vessel, optionally optimizing both travel time and energy efficiency. It not only mimics the actions of expert human operators but also improves upon performance criteria such as time and energy. Unlike human operators, however, the control unit may calculate the entire path, P, for the present maneuvering task-from start to finish-all at once.

The computer program product 20 comprises program code for executing the method described herein, including at least code for acquiring wind data indicating strength and direction of wind with respect to the marine vessel, acquiring current data indicating strength and direction of current with respect to the marine vessel, detecting positions of obstacles ahead of the marine vessel, determining constraints related to passing distance from the obstacles for the marine vessel, generating a path for the marine vessel for counteracting the wind and current calculated based on the wind data and current data while respecting the constraints, wherein the constraints are adjusted based on the wind data and the current data to ensure a buffer distance to the obstacle, and providing output data of the generated path.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1. A computer-implemented method for generating a path (P) for a marine vessel (10), the method comprising:

   acquiring (S102) wind data (28) indicating strength and direction of wind with respect to the marine vessel,
   acquiring (S104) sea current data (32) indicating strength and direction of current with respect to the marine vessel,
   detecting (S104) positions of at least one obstacle (40, 50) ahead of the marine vessel (10),
   determining (S106) constraints related to passing distance (D1, D2) from the obstacles (40, 50) for the marine vessel (10),
   generating a path (P) for the marine vessel (10) for counteracting the wind and current calculated based on the wind data and sea current data while respecting the constraints, wherein the constraints are adjusted based on the wind data and the current data to ensure a buffer distance (B1, B2) to the obstacles (40, 50), and
   providing output data (60) of the generated path.

2. The method of claim 1, wherein the generated path is determined such that it minimizes an energy (E) required for counteracting the wind and current.

3. The method of any of claims 1-2, wherein generating the path includes using an objective function (38) that includes minimizing an energy required for counteracting the wind and current.

4. The method of claim 3, the objective function further including to minimize the required propulsion energy of the marine vessel (10) while travelling the path.

5. The method of any of claims 3-4, wherein a mathematical model for environmental forces caused by the wind and current on the marine vessel is included in the objective function.

6. The method of any of claims 1-5, wherein the buffer distance (B1, B2) is selected such that it allows an operator to manually avoid obstacles in case of unpredicted events that affect a present path compared to the generated path.

7. The method of any of claims 1-6, wherein the adjustment of the constraints depends on the strengths and directions of the wind and current.

8. The method of any of claims 1-7, wherein the constraints are dynamically adjusted as the wind and current change.

9. The method of any of claims 1-8, wherein the obstacles include moving and static obstacles.

10. The method of any of claims 1-9, the method being continuously performed as the marine vessel is operated.

11. The method of any of claims 1-10, wherein the adjustment includes virtually moving the obstacles in opposite direction to environmental forces calculated based on the wind data and the current data.

12. The method of any of claims 1-11, method being autonomously performed for an at least partly autonomous marine vessel.

13. A control unit (16) configured to execute the method of any one of the preceding claims.

14. A marine vessel (10) comprising a control unit (16) according to claim 13.

15. A computer program product (20) comprising program code for performing the method according to any one of claims 1-12, when executed by a control unit.

*Fig. 1*

Acquire wind data — S102

Acquire sea current data — S104

Detect positions of obstacle — S106

Determine constraints related to passing distance from the obstacles for the marine vessel — S108

Generate a path for the marine vessel for counteracting the wind and current calculated based on the wind data and current data while respecting the constraints, wherein the constraints are adjusted based on the wind data and the current data to ensure a buffer distance to the obstacle — S110

Provide output data of the generated path — S112

*Fig. 2*

Fig. 3

# EP 4 726 487 A1

## EUROPEAN SEARCH REPORT

**Application Number**

EP 24 20 5319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/310857 A1 (FEYZMAHDAVIAN HAMID [SE] ET AL) 19 September 2024 (2024-09-19) * paragraph [0005] - paragraph [0100] * ----- | 1-15 | INV. G05D1/242 G05D1/606 G05D1/622 G05D1/646 G05D107/00 G05D109/30 G08G3/00 B63H25/00 |
| A | ÖZTÜRK ÜLKÜ ET AL: "A review of path planning algorithms in maritime autonomous surface ships: Navigation safety perspective", OCEAN ENGINEERING, PERGAMON, AMSTERDAM, NL, vol. 251, 30 March 2022 (2022-03-30), XP087019119, ISSN: 0029-8018, DOI: 10.1016/J.OCEANENG.2022.111010 [retrieved on 2022-03-30] * Chap. 4 * ----- | 1-15 | |

**TECHNICAL FIELDS SEARCHED (IPC)**

G05D

The present search report has been drawn up for all claims

| Place of search | Date of completion of the search | Examiner |
|---|---|---|
| Munich | 10 January 2025 | Thomann, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5319

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| US 2024310857 A1 | 19-09-2024 | EP 4411505 A1 | 07-08-2024 |
| | | US 2024310857 A1 | 19-09-2024 |

EPO FORM P0459

For more details about this annex : see Official Journal of the European Patent Office, No. 12/82